# EUROPEAN PATENT SPECIFICATION

(11) **EP 1 064 468 B1**
(45) Date of publication and mention of the grant of the patent: **04.09.2002**
(21) Application number: 99913281.4
(22) Date of filing: 19.03.1999
(51) Int. Cl.: F16D 3/72, F16D 1/08

(54) **TORSIONALLY RIGID, PLAY-FREE, FLEXIBLE METAL BELLOWS-TYPE COUPLING FOR THE TORQUE-TRANSMISSIVE CONNECTION OF TWO SHAFTS**
DREHFESTE, SPIELFREIE, ELASTISCHE BALGKUPPLUNG ZUR DREHMOMENTÜBERTRAGUNG ZWISCHEN ZWEI WELLEN
COUPLAGE TORSIONNELLEMENT RIGIDE ET SANS JEU REALISE PAR SOUFFLETS METALLIQUES FLEXIBLES POUR CONNEXION DE DEUX ARBRES AVEC TRANSFERT DE COUPLE

(30) Priority: 19.03.1998 DE 19812223
(43) Date of publication of application: 03.01.2001
(73) Proprietor: Chr. Mayr GmbH & Co. KG, D-87665 Mauerstetten (DE)
(72) Inventor: VOGL, Norbert, D-86935 Rott (DE); EBERLE, Johann, D-87660 Irsee (DE)
(74) Representative: Ruschke, Hans Edvard, Dipl.-Ing.
(86) International application number: PCT/EP99/01857
(87) International publication number: WO 99/047827

(56) References cited:
- EP-A- 0 534 926
- DE-A- 4 031 486
- DE-A- 4 217 765
- DE-C- 929 402
- US-A- 3 635 049
- US-A- 3 677 031
- US-A- 5 049 158
- US-A- 5 299 980

## Description

The invention relates to a torsionally rigid, play-free, metal bellows-type flexible coupling for the torque-transmitting connection of two shafts, which has the features given in the pre-characterizing portion of claim 1. A coupling of this kind is known from DE-C-929 402.

For connecting the metal bellows with the input and output shafts so that no torsional play can exist, the state of the art calls for two interfaces or joints, namely, one between the bellows and a hub and the other between that hub and the shaft. One drawback of the prior interfaces or joints is that they cannot be separated in a non-destructive manner - such as welds provided in accordance with a variety of processes, joints using one, two or more adhesive bonds, or beads and flanges. For the second interface or joint between the hub and the shaft, conical connections, shrink washers, collets or radially clamping hubs have been used in the past.

In the prior bellows-type couplings, the necessity of providing two interfaces or joints causes the following drawbacks: high cost of fabrication, insufficient flexibility when adapting the coupling to the customers' interface or connecting positions, and a high mass inertia due to the great number of components.

Where it is necessary to quickly provide a low-cost, torsionally rigid elastic compensating coupling, an ideal coupling design would have to have the following advantages:

Combination of the two interfaces or joints to form one interface or joint; modular construction; adaptability to compensate existing shaft misalignment by simple replacement of the torque-transmitting metal bellows; torsionally play-free design; high torsional rigidity; low rigidity to displacement; low mass moment of inertia.

In order to obtain all the aforesaid advantages, the object underlying the invention is seen in the provision of a metal bellows-type compensating coupling which is inexpensive to manufacture, is modular to enhance its availability, is torsionally rigid and torsionally play-free and elastic, and in the installed condition does not substantially affect drive train dynamics.

This object is achieved by means of the characterizing features specified in claim 1 .

Additional features of the invention are recited in the dependent claims.

The principle underlying the invention is the functional combination of the frictional connections between the bellows and the hub and between the hub and the shaft to form a single joint, with the cylindrical or inwardly slightly tapered end of the bellows frictionally engaged with the input and output shaft directly or indirectly by means of an external clamping unit.

East German patent DD 147 742 discloses a metal bellows-type coupling in which the end of the metal bellows is flanged out in a generally axial direction (slightly tapered or cylindrical with a crimp) and is placed over a hub on the shaft. An external member not described in detail is used to clamp the end down on the hub and thus on the shaft.

DE-A-42 17 764 shows a metal bellows-type coupling in which a radially slotted clamping ring - compressible by the width of the slot - is used to clampingly engage the metal bellows with the shafts. The manner of connecting the metal bellows with the clamping ring is not described in detail; also, it engages the shaft directly.

According to the disclosure of U.S. Patent 3,232,076, a metal bellows-type coupling is provided with a metal bellows axially cylindrically flanged out at its ends, said ends being introduced in recesses machined in internally tapered threaded sleeves. These sleeves receive external nuts which are oppositely tapered internally. The tapered bores receive an axially slitted double cone surrounding the shaft. Tightening the nut causes the double cone to be compressed radially and to be clamped down on the shaft.

The metal bellows coupling of U.S. patent 4,645,473 comprises a metal bellows with cylindrically flanged ends each seated on a ring. Adjoining the rings are axially hollow, longitudinally slitted sleeves having tapered outer threads thereon, said rings being placed on the shafts; tightening the threaded sleeves will radially compress them to clamp the metal bellows onto the shaft.

The journal "Antriebstechnik" 1997, issue no. 10, page 88, discloses a metal bellows-type coupling comprising a unit assembled of the metal bellows and a hub adhesively bonded thereto, said unit being placed on a hub connected with the shaft.

The following text describes exemplary embodiments of the invention, making reference to the attached drawings.
- Fig. 1: shows a longitudinal section of a first embodiment of the invention;
- Fig. 1a: shows - partially in section - an associated clamping ring;
- Fig. 2: shows a longitudinal section of a second embodiment of the invention;
- Fig. 2a: shows a plan view and a side view partially in section of an associated clamping ring;
- Fig. 2b: shows a first embodiment of a reducing sleeve for cylindrical shafts;
- Fig. 2c: shows a second embodiment of a reducing sleeve for tapered shafts; and
- Fig. 2d: shows a retaining spring.

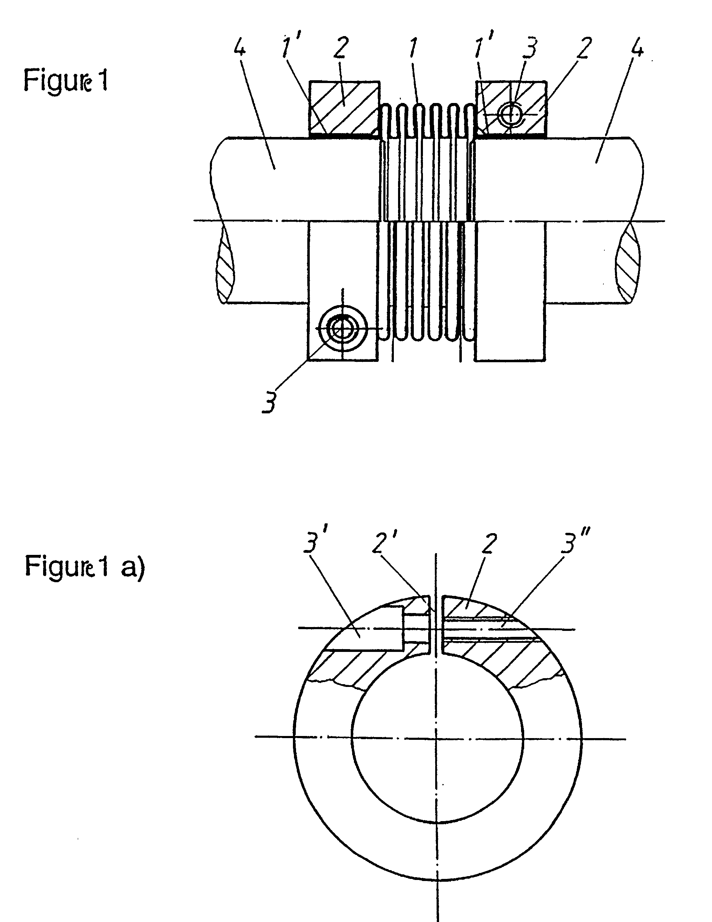

As shown in Fig. 1, two shafts 4 are interconnected at their ends for torque transmission by means of a metal bellows 1. To this end, metal bellows 1 has flanged-out ends 1' to frictionally engage shafts 4. Flanged-out ends 1' may be cylindrical or slightly inwardly conical or tapered, and they may or may not have longitudinal slits therein. The first embodiment is recommended for use on cylindrical ends 1', the second on slightly inwardly conical ends 1'; the last-mentioned shape enhances the frictional engagement.

Ends 1' of metal bellows 1 are clamped down on shafts 4 by external clamping means, which are shown here to comprise clamping rings 2. As shown in Fig. 1a, clamping ring 2 is radially slotted at a position 2' and can be compressed by the width of slot 2'. Preferably the slot is slightly wider than is necessary to enable the required compression to allow for wear, for oval deformation of the clamping ring 2, and for slightly differing shaft diameters. Clamping ring 2 consists of a suitably flexible elastic or resilient material, preferably a metal, such as spring steel. Compression is effected by a clamping screw 3 disposed in aligned bores in the two ends of the clamping ring 2, with the cylindrical bore 3' receiving the head and an internally threaded bore 3" receiving the threaded portion of the clamping screw 3. This ensures a torque-transmitting frictional engagement of metal bellows 1 with the ends of shafts 4.

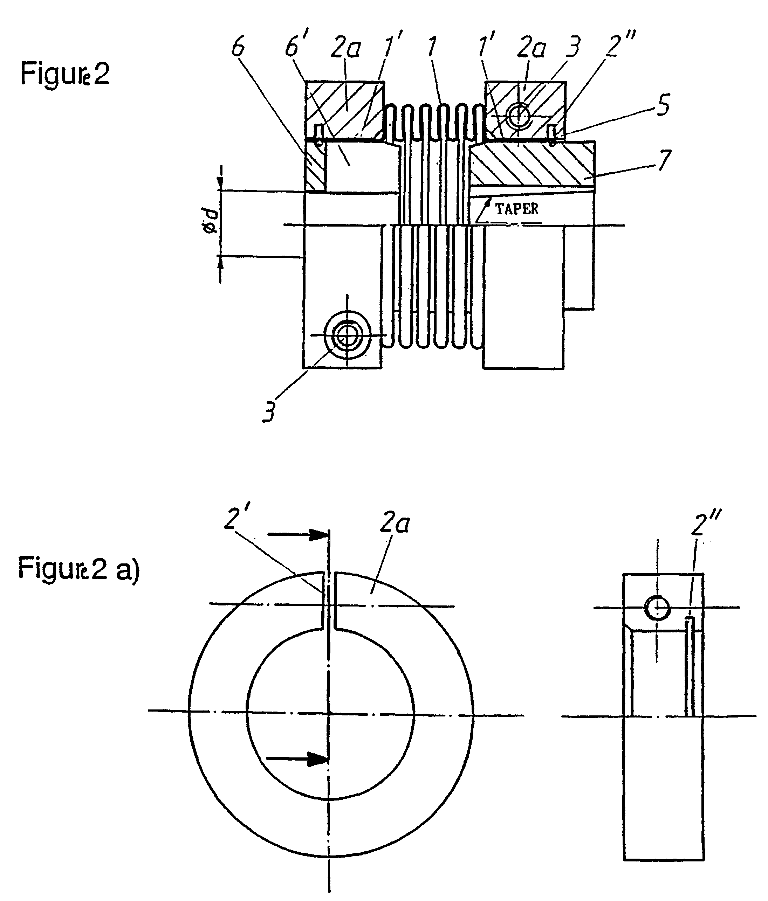

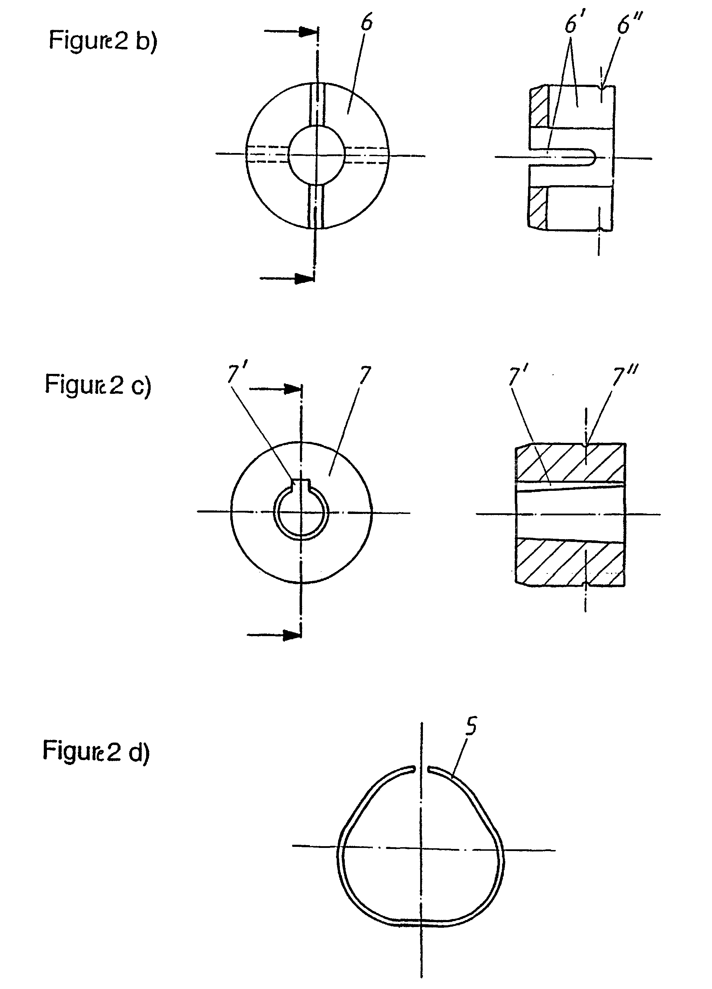

Figure 2 shows an embodiment of the invention particularly suited for the coupling of shafts of different diameters. It also has the ability to couple parallel shafts to conical shafts by the use respectively of reducing sleeves 6, 7 disposed between the shafts and the flanged out ends 1' of the metal bellows 1. The coupling of figure 2 has at its left end a reducing sleeve 6 which is shown in more detail in figure 2b to make up the difference in diameter between the flanged out end 1' and a parallel shaft entering the coupling of figure 2 from the left-hand side (not shown). The left-hand flanged out end 1' of the metal bellows 1 is clamped down onto the reducing sleeve 6 by a clamping ring 2a which is tightened in the manner described with reference to figure 1. If it is desired to join two parallel shafts then both the right and the left-hand end of the coupling shown in figure 2 can have similar reducing sleeves. Reducing sleeves of different internal diameters can enable the coupling of parallel shafts of different diameters.

The right-hand end of the coupling shown in figure 2 has a reducing sleeve with a conical inner bore as shown in figure 2c. Such a bore can typically be a "morse" taper or have a key way as shown in figure 2c. The flanged out end 1' of the mental bellows 1 at the right-hand end of figure 2 is clamped down onto the reducing sleeve 7 by means of a clamping ring 2a which can be tightened in the same way as shown in figure 1. In this case however the shaft (not shown) entering from the right-hand side of the coupling figure 2 is secured in the conical bore by virtue of the cone and therefore the clamping force does not need to be communicated through the reducing sleeve 7. The reducing sleeve 7 thus effectively becomes part of the shaft 4. Each of the clamping rings 2a shown in figure 2 has within its bore and positioned near to the end face, an annular groove 2". This groove aligns with a corresponding groove in the reducing sleeve 6, 7 and together hold a spring clip 5 which serves to prevent axial movement of the reducing sleeve with respect to the clamping ring before the clamping ring is tightened down.

Figure 2a shows the clamping ring 2a in more detail. The arrangement for tightening the clamping ring is however not shown in the left-hand diagram of figure 2a, but is the same as the arrangement shown in figure 2a. The right-hand diagram of figure 2a shows the radial extending annular groove 2" for reception of the retaining spring clip 5 disposed close to the right-hand outerface of the clamping ring. The inner face is provided with an internal bevel to clear the radius where the flanged out end 1' of the metal bellows merges into the central bellows section.

Figure 2b shows more detail of the reducing sleeve 6. This has a central bore for the reception of the parallel shaft and axially extending slots 6'. These slots are disposed at 90° spacing around the circumference of the sleeve and extend into the bore. They are machined alternately from opposing end faces of the sleeve. The slots provide a radial resilience enabling force exerted by the clamping ring 2a to be transmitted through to the cylindrical shaft thus holding the entire assembly rigid. This clamps the flanged out ends 1' of the metal bellows 1 between the clamping ring 2a and the reducing sleeve 6 and the reducing sleeve 6 on the cylindrical shaft (not shown). An annular groove 6" is shown in the cylindrical outer surface of the reducing sleeve 6 to accept the retaining spring clip 5 shown in figure 2d.

As shown in Fig. 2c, there is provided an internally conical reducing sleeve 7 with an internal key way 7' for securing on shaft 4; a radially extending circumferential groove 7" is machined in the external diameter in order to receive and hold retaining spring clip 5 in place.

Figure 2d shows the retaining spring clip 5, which preferably is polygonal in shape. It may be made of spring steel wire. The spring clip 5 is triangular, but square or pentagonal springs are also possible. The polygonal shape helps concentrate the force of the spring onto distinct sections of the spring, i.e. the center of the sides, and leaves protruding corners for ease of assembly, disassembly and engagement with the slot in the clamping ring. The presence of the spring clip gives rise to a snap action as the device is assembled. This assures the operator that the assembly is in a position for tightening.

An alternative arrangement to the clamping rings 2 and 2a described with respect to figures 1 and 2 is to use a commercially available shrink washer which directly clamps the ends 1' of the metal bellows 1 downs onto the shafts 4.

### List of Reference Characters

- 1: metal bellows
- 1': end
- 2: clamping ring
- 2a: clamping ring
- 2': radial slot in clamping ring
- 2": groove
- 3: clamping screw
- 3': bore
- 3": threaded bore
- 4: shafts
- 5: retaining spring
- 6: reducing sleeve
- 6': axial sleeve
- 7: reducing sleeve
- 7': groove
- 7": circumferential groove

## Claims

1. A torsionally rigid, play-free, flexible, metal bellows-type coupling for the torque-transmitting interconnection of two shafts (4), said metal bellows (1) having a generally axially flanged-out end (1') clamped down by a clamping ring (2, 2a) for frictional engagement on the ends of the shafts (4), **characterized by** a reducing sleeve (6,7) introduced between the flanged-out end (1') of metal bellows (1) and at least one of the shafts (4) to compensate for differences in diameter between the flanged-out end (1') and shaft (4).

2. Coupling as in claim 1, **characterized in that** the reducing sleeve (6) has axially extending slots (6') machined in the end faces thereof (Fig. 2b).

3. Coupling as in claim 2, **characterized in that** said axial slots (6') start alternatingly in the lefthand and in the righthand end face (Fig. 2b).

4. Coupling as in claim 1, **characterized in that** the reducing sleeve (7) is secured on the shaft (4) by means of a conical bore (Fig. 2c).

5. Coupling as in any one of claims 1 to 4, **characterized in that** the reducing sleeve (6, 7) is secured in place by means of retaining springs (5).

6. Coupling as in any one of claims 1 to 5, **characterized in that** bellows ends (1') are clamped down on the external diameter of reducing sleeve (6, 7) to effect frictional engagement therewith.

7. Coupling as in claim 6, **characterized by** a shape-locked, torsionally rigid connection of one end (1') of bellows (1) with the outer diameter of reducing sleeve (6, 7) in addition to the frictional engagement therebetween.

8. Coupling as in any one of claims 1 to 7, **characterized by** a retaining spring (5) received in a radial inner groove (2") in clamping ring (2a) for radially fixing clamping ring (2a) and reducing sleeve (6, 7) in place.

9. Coupling as in claim 8, **characterized by** retaining spring (5) in clamping ring (2a) having portions radially projecting from groove (2") into the bore.

10. Coupling as in claim 8 or 9, **characterized by** reducing sleeve (6) having in the outer diameter thereof a groove (6") to receive retaining spring (5) in a snap fit (Fig. 2b).

11. Coupling as in any one of claims 8 to 10, **characterized by** retaining spring (5) having the shape of an n-sided polygon (Fig. 2d).

12. Coupling as in claim 11, **characterized by** retaining spring (5) having the shape of a three-sided polygon.

13. Coupling as in any one of claims 8 to 12, **characterized by** retaining spring (5) being a wire part (Fig. 2d) bent to shape.

14. Coupling as in claim 1 or 13, **characterized in that** the flanged-out end (1') of metal bellows (1) is shaped to have a cylindrical or a slightly inwardly conical form.

15. Coupling as in any one of claims 1 to 14, **characterized in that** the end (1') of the bellows has no recesses therein.

16. Coupling as in any one of claims 1 or 15, **characterized in that** the end (1') of the bellows has axial slots therein.

17. Coupling as in any one of claims 1 to 16, **characterized in that** the urging device is a clamping screw (3) tangentially introduced in corresponding aligned bores (3, 3') of the clamping ring (2, 2a).

18. Coupling as in any one of the preceeding claims, **characterized by** clamping ring (2a) and reducing sleeve (6, 7) being axially secured in place by snap-in detent locking means, with the functional components of said means designed to be integral with clamping ring (2a) and reducing sleeve (6, 7).

## Patentansprüche

1. Eine drehsteife, spielfreie, elastische Metallbalgkupplung zur drehmomentübertragenden Verbindung zweier Wellen (4), wobei der Metallbalg (1) ein im allgemeinen ausgeflanschtes Ende (1') aufweist, das durch einen Klemmring (2, 2a) zur reibschlüssigen Verbindung auf den Enden der Wellen (4) fest geklemmt ist, **dadurch gekennzeichnet, daß** eine Reduzierbuchse (6, 7) zwischen dem ausgeflanschten Ende (1') des Metallbalges (1) und mindestens einer der Wellen (4) bereitgestellt wird, um Durchmesserunterschiede zwischen dem ausgeflanschten Ende (1') und der Welle (4) auszugleichen.

2. Kupplung nach Anspruch 1, **dadurch gekennzeichnet, daß** die Reduzierbuchse (6) axial sich erstreckende Schlitze (6') aufweist, die in die Endflächen davon eingearbeitet wurden (s. Fig. 2b).

3. Kupplung nach Anspruch 2, **dadurch gekennzeichnet, daß** die axialen Schlitze (6') abwechselnd auf der linken und der rechten Endfläche beginnen (Fig. 2b).

4. Kupplung nach Anspruch 1, **dadurch gekennzeichnet, daß** die Reduzierbuchse (7) mittels einer konischen Bohrung auf der Welle befestigt ist (Fig. 2c).

5. Kupplung nach einem der Ansprüche 1 bis 4, **dadurch gekennzeichnet, daß** die Reduzierbuchse (6, 7) mittels Haltefedern (5) an ihrem Platz gehalten wird.

6. Kupplung nach einem der Ansprüche 1 bis 5, **dadurch gekennzeichnet, daß** die Enden des Balges (1') auf dem Außendurchmesser der Reduzierbuchse (6,7) zur reibschlüssigen Verbindung fest geklemmt werden.

7. Kupplung nach Anspruch 6, **dadurch gekennzeichnet, daß** eine formschlüssige, drehfeste Verbindung zwischen einem Ende (1') des Balges (1) und dem Außendurchmesser der Reduzierbuchse (6, 7) besteht, zusätzlich zu deren reibschlüssiger Verbindung .

8. Kupplung nach einem der Ansprüche 1 bis 7, **dadurch gekennzeichnet, daß** eine Haltefeder (5) in einer radial inneren Vertiefung (2") im Klemmring (2a) aufgenommen wird, um den Klemmring (2a) und die Reduzierbuchse (6, 7) an ihren Plätzen zu halten.

9. Kupplung nach Anspruch 8, **dadurch gekennzeichnet, daß** die Haltefeder (5) im Klemmring (2a) Bereiche aufweist, die sich radial von der Vertiefung (2") in die Bohrung erstrecken.

10. Kupplung nach Anspruch 8 oder 9, **dadurch gekennzeichnet, daß** die Reduzierbuchse (6) in ihrem Außendurchmesser eine Vertiefung (6") aufweist, in die eine Haltefeder (5) einschnappen kann (Fig. 2b).

11. Kupplung nach einem der Ansprüche 8 bis 10, **dadurch gekennzeichnet, daß** die Haltefeder (5) die Form eines n-seitigen Polygons aufweist (Fig. 2d).

12. Kupplung nach Anspruch 11, **dadurch gekennzeichnet, daß** die Haltefeder (5) die Form eines 3-seitigen Polygons aufweist.

13. Kupplung nach einem der Ansprüche 8 bis 12, **dadurch gekennzeichnet, daß** die Haltefeder (5) aus einem Draht-Biegeteil besteht (Fig. 2d).

14. Kupplung nach Anspruch 1 oder 13, **dadurch gekennzeichnet, daß** das ausgeflanschte Ende (1') des Metallbalges (1) eine zylindrische oder leicht einwärts konische Form hat.

15. Kupplung nach einem der Ansprüche 1 bis 14, **dadurch gekennzeichnet, daß** das Ende (1') des Balges keine Vertiefungen aufweist.

16. Kupplung nach Anspruch 1 oder 15, **dadurch gekennzeichnet, daß** das Ende (1') des Balges axiale Schlitze aufweist.

17. Kupplung nach einem der Ansprüche 1 bis 16, **dadurch gekennzeichnet, daß** das Druck ausübende Teil eine Klemmschraube (3) ist, die tangential in den. entsprechend angeordneten Bohrungen (3, 3') des Klemmrings (2, 2a) aufgenommen wird.

18. Kupplung nach einem der vorangegangenen Ansprüche, **dadurch gekennzeichnet, daß** der Klemmring (2a) und die Reduzierbuchse (6, 7) durch einen zwischen beiden Teilen angeordneten Schnappverschluß axial fixiert werden, dessen Funktionsteile integrale Bestandteile des Klemmrings (2a) und der Reduzierbuchse (6, 7) sind.

## Revendications

1. Accouplement de type à soufflet métallique, flexible, sans jeu, résistant à la torsion pour l'assemblage à transmission de couple de deux arbres (4), ledit soufflet métallique (1) ayant une extrémité généralement évasée dans le sens axial (1') montée à l'aide d'un collier de serrage (2, 2a) pour un engagement par friction sur les extrémités des arbres (4), **caractérisé par** un manchon réducteur (6, 7) introduit entre l'extrémité évasée (1') du soufflet métallique (1) et au moins l'un des arbres (4) pour compenser les différences de diamètre entre l'extrémité évasée (1') et l'arbre (4).

2. Accouplement selon la revendication 1, **caractérisé en ce que** le manchon réducteur (6) a des fentes s'étendant dans le sens axial (6') usinées sur les faces d'extrémité de celui-ci (figure 2b).

3. Accouplement selon la revendication 2, **caractérisé en ce que** lesdites fentes axiales (6') commencent en alternance sur la surface d'extrémité du côté gauche et du côté droit (figure 2b).

4. Accouplement selon la revendication 1, **caractérisé en ce que** le manchon réducteur (7) est maintenu sur l'arbre (4) au moyen d'un alésage conique (figure 2c).

5. Accouplement selon l'une quelconque des revendications 1 à 4, **caractérisé en ce que** le manchon réducteur (6, 7) est fixé en place au moyen de ressorts de retenue (5).

6. Accouplement selon l'une quelconque des revendications 1 à 5, **caractérisé en ce que** les extrémités du soufflet (1') sont montées sur le diamètre externe du manchon réducteur (6, 7) pour effectuer l'engagement par friction sur celui-ci.

7. Accouplement selon la revendication 6, **caractérisé par** un assemblage résistant à la torsion, de forme concentrique d'une des extrémités (1') du soufflet (1) et du diamètre externe du manchon réducteur (6, 7) outre l'engagement par friction entre eux.

8. Accouplement selon l'une quelconque des revendications 1 à 7, **caractérisé par** un ressort de retenue (5) logé dans une gorge interne radiale (2") du collier de serrage (2a) pour maintenir dans le sens radial le collier de serrage (2a) et le manchon réducteur (6, 7) en place.

9. Accouplement selon la revendication 8, **caractérisé par** un ressort de retenue (5) dans le collier de serrage (2a) ayant des parties faisant saillie dans le sens radial depuis la gorge (2") jusque dans l'alésage.

10. Accouplement selon la revendication 8 ou 9, **caractérisé par** un manchon réducteur (6) ayant dans le diamètre externe de celui-ci une gorge (6") pour loger un ressort de retenue (5) dans un système d'encliquetage (figure 2b).

11. Accouplement selon l'une quelconque des revendications 8 à 10, **caractérisé par** un ressort de retenue (5) ayant la forme d'un polygone à n côtés (figure 2d).

12. Accouplement selon la revendication 11, **caractérisé par** un ressort de retenue (5) ayant la forme d'un polygone à trois côtés.

13. Accouplement selon l'une quelconque des revendications 8 à 12, **caractérisé en ce que** le ressort de retenue (5) est un élément en fil (figure 2d) mis en forme.

14. Accouplement selon la revendication 1 ou 13, **caractérisé en ce que** l'extrémité évasée (1') du soufflet métallique (1) est façonnée de manière à avoir une forme cylindrique ou légèrement conique vers l'intérieur.

15. Accouplement selon l'une quelconque des revendications 1 à 14, **caractérisé en ce que** l'extrémité (1') du soufflet n'a pas de logements dans celle-ci.

16. Accouplement selon l'une quelconque des revendications 1 ou 15, **caractérisé en ce que** l'extrémité (I') du soufflet a des fentes axiales en elle.

17. Accouplement selon l'une quelconque des revendications 1 à 16, **caractérisé en ce que** le dispositif de forçage est une vis de serrage (3) introduite tangentiellement dans les alésages alignés (3, 3') correspondants du collier de serrage (2, 2a).

18. Accouplement selon l'une quelconque des revendications précédentes, **caractérisé en ce que** le collier de serrage (2a) et le manchon réducteur (6, 7) sont maintenus en place dans le sens axial par des moyens de verrouillage à crans encliquetables, les éléments fonctionnels desdits moyens étant conçus pour former une seule pièce avec le collier de serrage (2a) et le manchon réducteur (6,7).
